# EUROPEAN PATENT SPECIFICATION

(11) **EP 3 540 994 B1**
(45) Date of publication and mention of the grant of the patent: **28.10.2020**
(21) Application number: 19159105.6
(22) Date of filing: 25.02.2019
(51) Int. Cl.: H04L 12/893, H04L 12/891, H04L 12/803, H04L 12/801, H04L 1/08, H04L 1/18, H04L 1/00

(54) **METHOD AND DEVICE FOR SENDING DATA PACKETS ON A FIRST AND A SECOND LINKS**
VERFAHREN UND VORRICHTUNG ZUM SENDEN VON DATENPAKETEN AUF EINER ERSTEN UND EINER ZWEITEN VERBINDUNG
PROCÉDÉ ET DISPOSITIF D'ENVOI DE PAQUETS DE DONNÉES SUR UNE PREMIÈRE ET UNE SECONDE LIAISON

(30) Priority: 15.03.2018 EP 18305279
(43) Date of publication of application: 18.09.2019
(73) Proprietor: InterDigital CE Patent Holdings, 75017 Paris (FR)
(72) Inventor: QUINQUIS, Cyril, 35576 Cesson-Sévigné Cedex (FR); GAUTIER, Eric, 35576 Cesson-Sévigné Cedex (FR); MONTALVO, Luis, 35576 Cesson-Sévigné Cedex (FR)
(74) Representative: Huchet, Anne

(56) References cited:
- WO-A1-2016/064499
- US-A1- 2015 009 990

## Description

### 1. TECHNICAL FIELD

The present disclosure relates to the networking domain, particularly to networking equipment transmitting data packets over multiple links.

### 2. BACKGROUND ART

Networking equipment receiving data packets from a first link, or set of links and forwarding those data packets over multiple links is well known in the art. The problem of deciding over which link to transmit data packets is known as packet scheduling or load balancing. It is known to monitor local parameters of the different links of the networking equipment such as for example, the number of data packets waiting for transmission on the different links and to schedule the transmission of these data packets on the different links accordingly. Round robin scheduling or weighted round robin scheduling are examples of such known techniques. Such local techniques perform relatively well for adjusting the scheduling policy to local variations. It is also known to rely on more global network decisions for distributing the traffic in the network over various links of various pieces of networking equipment. Load balancing over various links of a networking equipment may be the result of a network reconfiguration, not necessarily taken locally at the networking equipment. WO 2016/064499 represents a relevant piece of art. For example, when a link failure is detected, a network reconfiguration will adjust the data distribution accordingly. However, in case of transient problems there is a risk that a link is detected as permanently failed and the network reconfigured accordingly, leading to a waste of resources. The present disclosure has been designed with the foregoing in mind.

### 3. SUMMARY

In a context of transient disturbance occurring at a networking equipment receiving and forwarding data packets on a plurality of links according to a scheduling policy, a salient idea is to detect retransmitted packets among the received packets, the retransmitted packets being received by the networking equipment, corresponding to retransmissions of packets previously received and forwarded by the networking equipment on one of the links. The retransmissions of the packet, previously forwarded on one of the links are representative of a disturbance of the link and the scheduling policy is advantageously adjusted to balance at least a part of the data traffic from that link to the other links. Detecting retransmissions of packets according to a protocol at a networking equipment, not terminating the retransmission protocol (the packet retransmission not being initiated by the networking equipment), allows to identify transient problems on local links impacting the overall network performance. This further allows taking local decision such as temporarily load balance the data traffic to other links while the link is disturbed, avoiding stronger network reconfigurations, such as more global load balancing reconfiguration or network handovers.

To that end a method for sending data packets from a networking equipment to a device on a first and a second links according to claim 1 is disclosed.

According to a variant, the method further comprises sending through the first link a decreased proportion of the data packets as a function of the detected retransmitted packets.

According to another variant, sending the increased proportion of the data packets through the second link corresponds to exclusively sending the data packets on the second link.

According to another variant, the method further comprises extracting a sequence number of a protocol from a packet received through the third link, said packet being detected as retransmitted in case the extracted sequence number matches a previous sequence number of the protocol, extracted from a previous packet previously received through the third link and sent through the first link, the sequence number and the previous sequence numbers corresponding to a same session of the protocol.

According to another variant, the increased proportion of the data packets is sent through the second link during a first period of time before a restored proportion of the data packets is sent through the second link, the restored proportion corresponding to a proportion of data packets sent through the second link before sending the increased proportion.

According to another variant, the method further comprises monitoring the first link while sending the increased proportion of the data packets through the second link.

According to another variant, monitoring the first link comprises sending probe packets to the device through the first link and detecting the first link being operational again when acknowledgment packets are received in response to the probe packets.

According to another variant, the method further comprises sending a restored first proportion of the data packets through the first link and a restored second proportion of the data packets through the second link, the restored first and second proportions corresponding to the proportions sent respectively through the first and second links before sending the increased proportion through the second link.

According to another variant, the first link is a broadband cellular wireless network link, and the second link is a wireless local area network link.

According to another variant, the first link uses millimetric radio frequency channels.

According to another variant, the method further comprises avoiding a handover of the first link despite of a disturbance of the first link during at least a third period of time.

According to another variant, the method further comprises transmitting signalling packets through the second link, the signalling packets comprising radio resource control signalling related to the first link.

According to another variant, an Aggregation Using IPSec tunnel is used to aggregate the first and the second links, the signalling packets being LWIP packets, encapsulating RRC signalling messages.

In a second aspect, a networking equipment for sending data packets to a device through a first and a second links according to claim 14 is also disclosed.

In a fourth aspect, a computer program product for sending data packets is also disclosed. The computer program product comprises program code instructions executable by a processor for performing the method implemented in any of its variants.

In a fifth aspect, a non-transitory computer-readable storage medium storing computer-executable program instructions for sending data packets is also disclosed. The computer-readable storage medium comprises instructions of program code executable by at least one processor to perform the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described wired or wireless networking technologies and any other type of wired and/or wireless networking technologies is compatible with the disclosed principles. The present principles are not further limited to the described transport protocols and are applicable to any other transport protocols comprising a retransmission capability.

Besides, any characteristic, variant or embodiment described for a method is compatible with a device comprising means for processing the disclosed method, with a device comprising a processor configured to process the disclosed method, with a computer program product comprising program code instructions and with a non-transitory computer-readable storage medium storing program instructions.

### 4. BRIEF DESCRIPTION OF THE DRAWINGS

- **Figure 1** illustrates a system overview involving a networking equipment 1 according to a specific and non-limiting embodiment of the disclosed principles;
- **Figure 2** depicts an example of a method for sending data packets by a networking equipment to a device through a fist link and a second link according to a specific and non-limiting embodiment of the disclosed principles;
- **Figure 3** illustrates a structure of a data packet according to a specific and non-limiting embodiment of the disclosed principles;
- **Figure 4A****,** illustrates a processing device for sending data packets to a device according to a specific and non-limiting embodiment of the disclosed principles;
- **Figure 4B** represents an exemplary architecture of the processing device of figure 4A according to a specific and non-limiting embodiment.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term" interconnected " is defined to mean directly connected to or indirectly connected with through one or more intermediate components. Such intermediate components may include both hardware and software based components. The term "interconnected" is not limited to a wired interconnection and also includes wireless interconnection.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to scheduling the transmission of data packets over various links of a networking equipment. By link, it is meant here and throughout the document, the use of a networking technology for exchanging data packets between two logical or physical entities. Data packets represent any set of data being transmitted between the two logical or physical entities using any networking technology. Networking technology is to be understood with a broad scope including any type of communication protocol. Communication protocols of any layer, such as for example and without limitation a data link layer protocol, a network layer protocol, a transport layer protocol or an application layer protocol interconnecting two entities using for example a tunnelling are compatible with the disclosed principles.

Scheduling the transmission of an amount of data packets over various links relates to the problem of deciding which proportion of an amount of data packets is to be transmitted over which link.

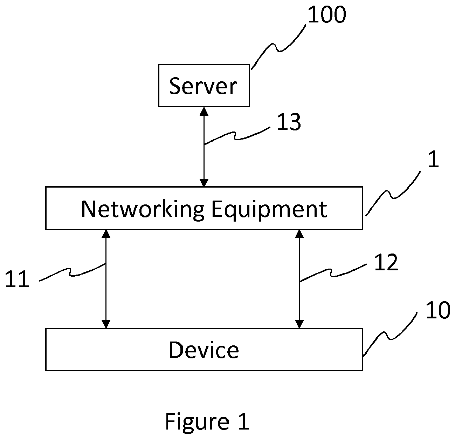

**Figure 1** illustrates a system overview involving a networking equipment 1 according to a specific and non-limiting embodiment of the disclosed principles. The networking equipment 1 is interconnected to a device 10 via a first link 11 and a second link 12. Both links can be used to transfer data packets between the networking equipment 1 and the device 10. The networking equipment 1 is further interconnected to a further device 100 via a third link 13. The further device 100, for example a server, is communicating with the device 10, by exchanging data packets through at least the networking equipment 1.

The networking equipment 1 receives an amount of data packets, for example from the server 100, the data packets being targeted to the device 10. The data packets are received by the networking equipment 1 via the third link 13. The networking equipment 1, in the process of transmitting the data packets to the device 10 decides which proportion of the data packets is to be transmitted on the first 11 link, and which proportion of the data packets is to be transmitted on the second link 12, so that all the data packets are ultimately transmitted to the device 10 (either on the first or the second link). This decision is taken according to for example a scheduling policy. Similarly, the device 10, in the process of transmitting a data packet to the networking equipment 1 also applies a scheduling policy to decide on which of the first 11 or the second 12 link data packets are to be transmitted.

The first 11 and the second 12 links interconnect the device 10 and the networking equipment 1 according to any networking technology. According to a specific and non-limiting embodiment, the first and the second links are wireless links such as for example and without limitation a wireless local area network link and a broadband cellular wireless network link. The wireless local area network is for example a Wi-Fi network or a Bluetooth network according to any variant of their respective standard. The broadband cellular wireless network is for example a 3G (third generation) broadband cellular network or a 4G (fourth generation) broadband cellular network also known as LTE (Long Term Evolution), network. In yet another example the broadband cellular wireless network is a 5G (fifth generation) broadband cellular network. In any of the variants the first and the second links are aggregated into a single logical link according to an aggregation method. In a first example the first and the second links are aggregated using LWA (LTE-WLAN aggregation), defined by 3GPP (Third Generation Partnership Project) in 3GPP TS 136 361. In a second example, the first and the second links are aggregated using LWIP (LTE-Wi-Fi aggregation using IPsec tunnel), defined in 3GPP TS 136 360. LWA and LWIP are two different alternatives defined by 3GPP for link aggregation using different encapsulations and protocol stacks. In yet another example the first and the second links are aggregated above the IP layer using a multi-homing transport protocol such as for example and without limitation SCTP (Stream Control Transmission Protocol) or MPTCP (Multi Path Transport Control Protocol). More generally the disclosed principles are compatible with any aggregation technology able to aggregate the first and the second links between the device 10 and the networking equipment 1 into a single logical communication link. The disclosed principles are not limited to only two links interconnecting the device 10 and the networking equipment 1 and are applicable to any number of links interconnecting both devices. The disclosed principles are further not limited to wireless links and are also applicable to wired links or combinations of wired and wireless links. As previously mentioned links involving communication protocols of any type, and of various different layers (from data link to application layer), involving tunnelling as necessary, aggregated using any aggregation technology are compatible with the disclosed principles.

For the sake of clarity and without loss of generality, the links are described as unidirectional links, i.e. receiving or transmitting packets. But the disclosed principles are applicable to bidirectional links, comprising for example two unidirectional links.

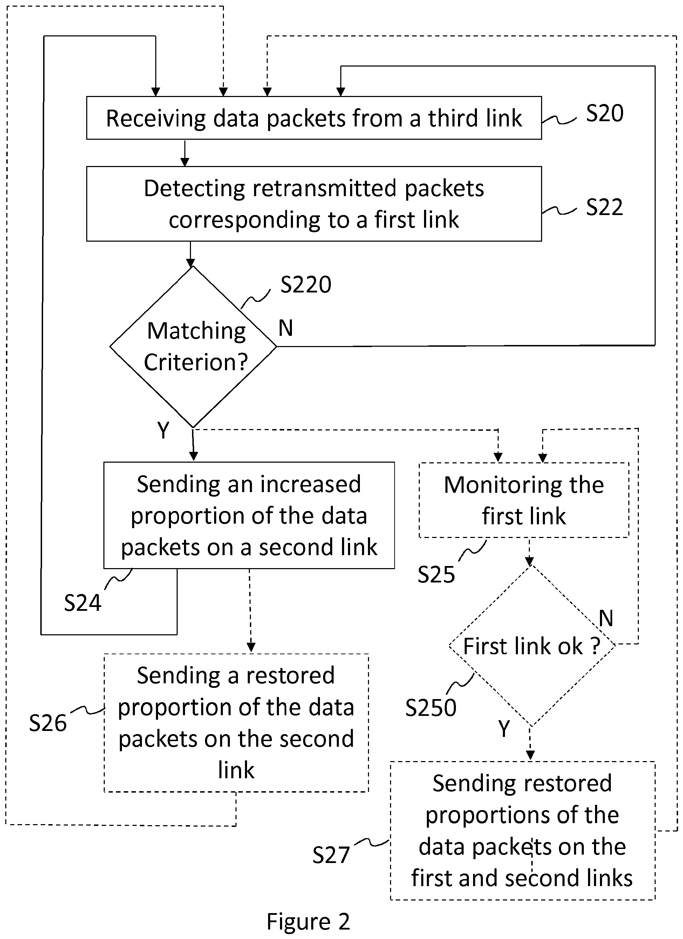

**Figure 2** depicts an example of a method for sending data packets by a networking equipment 1 to a device 10 through a first link 11 and a second link 12 established between the networking equipment 1 and the device 10 according to a specific and non-limiting embodiment of the disclosed principles.

In the step S20, the networking equipment 1 receives an amount of data packets targeted to the device 10 . The data packets are for example sent by a server 100 to the device 10. The data packets are received by the networking equipment 1 through a third link 13 established between the server 100 and the networking equipment 1, at an inbound data rate. The data packets are split in two parts, wherein a first part of the data packet is transmitted to the device 10 on the first link 11 at a first data rate and a second part of the data packets is transmitted to the device 10 over the second link 12 at a second data rate. This data split corresponds to the scheduling decision taken by the networking equipment 1 to transmit the data packets over both links 11 and 12. The sum of the first and the second data rates corresponds to the inbound data rate. Said differently, the networking equipment 1 sends a first proportion of the received data packets on the first link 11 and a second proportion of the received data packets on the second link 12, wherein the sum of the first and the second proportion of the received data packets corresponds to the amount of the received data packets targeted to the device 10.

In the step S22, the networking equipment 1 detects retransmitted packets among the data packets received from the server 100 through the third link 13 and targeted to the device 10, the retransmitted packets being representative of a disturbance of the first link 11. The detected retransmitted packets are in fact a portion of the data packets among the received data packets that are detected as having been retransmitted by the server 100 and being directed to the device 10. For example, the server 100 generates an initial data packet targeted to the device 10. The initial data packet is received by the networking equipment 1 through the third link 13 and is transmitted to the device 10 via the first link 11. In case an error occurs on the first link 11 (that cannot be recovered via link layer protocols (such as automatic repeat request (ARQ)), the transmission is corrupted, and the initial data packet is not received by the device 10. The server 100, detecting the initial packet loss, retransmits the initial data packet towards the device 10, the retransmitted packet being received by the networking equipment 1 and forwarded to the device 10. As the retransmitted data packet is received by the networking equipment 1, it is detected by the networking equipment 1 as a retransmitted data packet (e.g., a data packet having been retransmitted by the server 100) corresponding to an initial data packet transmitted through the first link 11. This detected retransmitted data packet is representative of a potential disturbance of the first link 11 as the initial data packet was initially transmitted on the first link 11. However, a disturbance of the first link 11 may not be responsible of that packet loss, as the initial data packet may have been lost elsewhere in the network, but a disturbance of the first link 11 may have contributed to the packet loss. In any case the detected retransmitted data packet corresponds to an initial data packet initially transmitted through the first link 11 by the networking equipment 1. For the sake of conciseness, detected retransmitted packets (among the data packets received from the server) may be used throughout the current principles to refer to a portion of the data packets (among the data packets received from the server) that are detected by the networking equipment 1 as having been retransmitted by the server 100 (e.g., as being a retransmission by the server of a previous packets previously transmitted by the server 100 and targeted to the device 10).

The packet retransmission by the server 100 is detected by the networking equipment 1 for example by parsing the received data packet looking for data fields indicative of a retransmission, such as for example and without limitation a retransmission protocol.

In a first example, the data packets may comprise a data field that implicitly or explicitly indicates the data packet is a retransmitted packet (e.g., is a retransmission by the server of a data packet that has already been transmitted by the server). In a first variant the data field is a Boolean indicating a Boolean retransmitted status. In a second variant, the data field indicates the number of retransmissions by the server of a same data packet. According to any variant and/or example, the data packet comprises an (explicit or implicit) indication that it is either an initial transmission of a packet by the server, or a retransmission of a packet that has already been (re)-transmitted. A retransmitted packet is detected among the received data packet if the retransmitted packet indicates it is a retransmission of a data packet that has been already (e.g., previously) (re)-transmitted by the server.

In a second example, a sequence number of a retransmission protocol is for example extracted by the networking equipment 1 from a data packet received from the third link 13. The received data packet is detected as a retransmitted data packet in case the extracted sequence number matches a previous sequence number extracted from a previous data packet transmitted according to the same retransmission protocol, previously received through the third link 13 and previously sent through the first link 11, the sequence number and the previous sequence numbers corresponding to a same session or a same connection of the retransmission protocol. For the sake of clarity and without loss of generality, the disclosed principles are described considering the retransmission protocol is the Transmission Control Protocol or TCP, but any transport protocol able to reliably transmit data packets through retransmissions is compatible with the disclosed principles.

According to a specific and non-limiting embodiment, received packets are parsed, sequence numbers are extracted and stored in a memory of the networking equipment 1 together with an indication of the link 11 or 12 on which the transmission is scheduled. Moreover, as sequence numbers continuously increase on a per connection (or session) basis, they are further stored together with an identifier of the connection (or session) they belong to. In other words, for the data packets transmitted to the device 10, the networking equipment 1 keeps track of the sequence numbers, the connection (or session) identifiers and the link 11 or 12 on which the various data packets are transmitted. Taking the example of TCP, the TCP sequence numbers are extracted, together with TCP connection identifiers. A TCP connection is identified by for example a tuple comprising a source IP Address, a destination IP address, a source TCP port and a destination TCP port. The source IP address and the source TCP port are related to the server, the destination IP address and the destination TCP port are related to the device 10. A retransmitted data packet corresponding to the first link 11 is detected by extracting the sequence number of a received packet, and by comparing the extracted sequence number with already stored sequence numbers, corresponding to packets previously received through the third link 13 and previously sent through the first link 11, the sequence number and the previous sequence numbers corresponding to a same TCP connection. Similarly, a retransmitted data packet corresponding to the second link 12 is detected by extracting the sequence of a received packet, and by comparing the extracted sequence number with already stored sequence numbers, corresponding to packets previously received from the third link 13 and previously sent on the second link 12, the sequence number and the previous sequence numbers corresponding to a same TCP connection. In a variant, continuous retransmitted packets are detected, corresponding to either the first link 11 or the second link 12 by determining numbers of retransmitted packets having a continuously increasing sequence number. Continuous retransmitted packets indicate sizes of bursts of losses corresponding to a link.

In the step S220, a criterion is evaluated as -a function of the detected retransmitted packets corresponding to the first and/or the second links 11, 12 to decide whether to adjust the scheduling policy (in case of a matching criterion) or to keep it unchanged (in case of not matching the criterion).

In a first variant, the criterion corresponds to a difference between the detected retransmitted packet ratios of both links that is evaluated against a given value. The scheduling policy is for example adjusted in case a difference between the number of the detected retransmitted packets corresponding to the first link 11 and the number of the detected retransmitted packets corresponding to the second link 12 is above a value, the scheduling policy being unchanged otherwise. In a first example the value is ten. In a second example the value is 100. Any value is compatible with the disclosed principles.

In a second variant, continuous retransmitted packets are detected, and the first variant is applied only to continuous retransmitted packets. Continuous retransmitted packets mean that a sequence of packets has been retransmitted and correspond to continuously increasing sequence number values (no packet transmission has been successful in the sequence of packets).

In a third variant, the criterion corresponds to the numbers (or ratios) of detected continuous retransmitted packets that are evaluated on each of the first and the second links against respectively a first and a second value. According to the third variant the criterion matches in case the detected continuous retransmitted packet number (or ratio) of the first link 11 is above the first value and the detected continuous retransmitted packet number (or ratio) of the second link 12 is below the second value, the criterion being unmatched otherwise. In other words, the scheduling policy is adjusted in case the number of detected continuous retransmitted packets for a link is above a first value, the number of detected retransmitted packets for the other link(s) being below a second value. The first value is for example between one hundred and one thousand, and the second value is between one and fifty representing a significant difference of disturbance between the one link with regards to the other(s).

In yet another variant, the scheduling policy is adjusted in case the number of detected retransmitted packets for a link is above the first value but only a few packets (which number remains under a second value for example ten) were not detected as retransmitted (i.e. were successfully transmitted to the device 10), the scheduling policy being otherwise unchanged.

In yet another variant, the scheduling policy is adjusted in case during for example two seconds, all the received packets are detected retransmitted at least once for one of the two links 11, 12, the scheduling policy remaining unchanged otherwise. This variant is well suited for links subject to transient degradation such as for example millimetric wave links. Such links are indeed very sensitive to non-line of sight situations, such as for example when a human body is temporarily located between the receiver and the transmitter of the millimetric wave link. In the disclosed principles wireless link is considered millimetric wave if within the frequency range 30GHz-300GHz.

Any combination of the above variants, and more generally any criteria evaluating a substantial difference between the detected retransmitted packets corresponding to the different links for adjusting the scheduling policy is compatible with the disclosed principles.

In the step S24, the scheduling policy is adjusted by sending an increased proportion of the data packets on the second link 12. Considering for example that an amount of data packets targeted to the device 10 is received through the third link 13, a first part is sent on the first link11 and a second part is sent on the second link 12 according to the scheduling policy, the sum of the first and the second parts corresponding to the amount of received packets targeted to the device 10. Adjusting the scheduling policy by sending an increased proportion of the data packets through the second link 12 corresponds to increase the portion of the data packets to be sent on the second link 12 compared to the original second part, and to decrease the portion of the data packets to be sent on the first link 11 compared to the original first part. In a first example the proportion of data packets sent on the second link 12 is increased by a fix amount. In a second example the proportion of data packets sent on the second link 12 is increased by an amount depending on the detected retransmitted packets on the first link 11. In other words, the scheduling policy is adjusted by sending an increased proportion of the data packets on the second link 12 as a function of the detected retransmitted packets corresponding to the first link 11 in any of the above variants. The increased proportion for example linearly depends on the amount of detected retransmitted packets. Any kind of increasing function is compatible with the disclosed principles.

In a first variant, the data packets are scheduled on the first link 11 and the second link 12 according to the adjusted scheduling policy. Further packets targeted to the device 10 are further received through the third link 13 in the step S20. Retransmitted data packets are further detected in the step S22; and the criterion is iteratively re-evaluated in the step S220 as the data packets are scheduled according to the adjusted policy in any of the above variant. Depending on the criterion evaluation, the scheduling policy is iteratively readjusted again or not.

In a second optional variant, the increased proportion of the data packets is sent through the second link 12 during a first period of time before a restored proportion of the data packets is sent through the second link 12 in an optional step S26, the restored proportion corresponding to a proportion of data packets sent through the second link 12 before sending the increased proportion. Symmetrically, a decreased proportion of the data packets is sent through the first link 11 during the first period of time before another restored proportion of the data packets is sent through the first link 11 in the optional step S26, the other restored proportion corresponding to the proportion of data packets sent through the first link 11 before sending the decreased proportion. In a first example the first period of time is a fix period of time (for example one or several ten of seconds). In a second example the length of the period of time is also function of the amount of detected retransmitted packets (the higher the number of retransmitted packets, the longer the first period of time).

In a third optional variant, as the criterion of the step S24 matches, revealing a substantial difference between the detected retransmitted packets corresponding to the different links so that the scheduling policy is being adjusted accordingly, the first link11 is monitored in an optional step S25 to detect when the disturbance of the first link 11 ends or at least decreases. In a first example monitoring comprises monitoring the packet error rate of the first link 11 to determine when the packet error rate retrieves a similar value as before the scheduling policy adjustment. In a second example, monitoring the first link 11 comprises sending probe packets to the device 10 through the first link 11. Probe packets are for example and without limitation TCP empty data packets, sent through the first (disturbed) link 11 at regular time intervals. Acknowledgement reception to the probe packets is further monitored as well by the networking equipment 1. In the optional step S250, it is further determined whether the first link 11 has recovered from the disturbance and may be used similarly as before. The first link 11 is detected as operational again when acknowledgment packets are received in response to the probe packets for example during a second period of time. Different periods of times may be used to determine that the first link 11 is operational again, depending on the type of disturbance that is likely to occur on the links. Without limitation, a typical value of such a period of time is ten seconds. Any other shorter or longer period of time is compatible with the disclosed principles. As long as the first link 11 is not detected as operational again, the packets are sent according to the adjusted scheduling policy determined at step S24. When the first link 11 is detected as operational again in the optional step S250, a restored first proportion of the data packets is sent through the first link 11 and a restored second proportion of the data packets is sent through the second link 12 in the optional step S27, the restored first and second proportions corresponding to the proportions sent respectively on the first link 11 and the second link 12 before adjusting the scheduling policy (i.e. sending the increased proportion through the second link 12).

According to a specific and non-limiting embodiment, when the criterion matches in the step S220 according to any of the above variant and revealing a substantial difference between the detected retransmitted packets corresponding to the different links, all the received data packets targeted to the device 10 are sent over the second link 12, and no data packet is sent through the first link 11, for a given period of time. Such an embodiment is particularly adapted to situations where at least one of the links 11, 12 is a wireless millimetric link. Indeed, a millimetric wireless link is very sensitive to blockage when an obstacle is temporally located between the wireless transmitter and the wireless receiver. Totally balancing the traffic from one link to the other represents a good solution as long as the blockage remains. According to this specific and non-limiting embodiment, after having balanced all the traffic to the second link 12, the first link 11 is monitored, and the initial scheduling policy is restored when the first link 11 is detected operational again. Taking an illustrative example, the networking equipment 1 may be an access node (such as an evolved node B, eNB) of a broadband cellular network, and the first link 11 may be a 5G broadband cellular network interface in the millimetric band, providing very high throughput as long as the wireless device 10 remains relatively line of sight with the networking equipment 1. The second link 12 may be a Wi-Fi wireless link of either the 2.4 or the 5Ghz band. In case an obstacle is located between the networking equipment 1 and the device 10, the throughput will drastically drop for the first link 11, and the traffic can be advantageously temporarily balanced to the Wi-Fi link 12 which is less sensitive to blockage, rather than triggering a handover from the networking equipment 1 towards another broadband cellular network access node. According to this exemplary non-limiting embodiment, the method further comprises avoiding, or at least delaying a handover of the access node to another access node despite of a disturbance of the first link 11 during a period of time. In 3GPP, the handover is triggered by the access node, called eNB (evolved Node B), not by the user equipment. When using millimetric wireless bands more sensitive to blockage, a handover may be triggered by the eNB detecting bad wireless conditions, despite the link disturbance being only transitory. Delaying the handover is advantageous as it allows avoiding spurious handovers triggered on transitory wireless interface disturbances.

According to a specific and non-limiting embodiment of the disclosed principles, the method further comprises transmitting signaling packets through the second link 12, the signaling packets comprising radio resource control signaling related to the first link 11. Taking the previous non-limiting example where the first link 11 is a broadband cellular network interface (for example 5G in the millimetric band), the second link12 is a wireless LAN interface in one of either the 2.4 or the 5GHz band, both links being aggregated to provide boosted performances between networking device 1, and the wireless device 10, a blockage situation may be damageable to the overall performances. As the signaling of the aggregation protocol is carried over the broadband cellular network interface corresponding to the first link 11, a blockage of the first link 11 has drastic impact on the performance of the aggregation protocol. The method advantageously comprises transmitting the signaling packets related to the aggregation protocol on the second link 12 instead of the first link 11. For example, when using LWIP aggregation the 3GPP standard specified that it is up to the eNB to configure the User Equipment for the LWIP support. In particular it specifies that the configuration shall be done through the Radio Resource Control (RRC) signaling. In other words, once the eNB, which corresponds to the networking equipment 1, adjusted its scheduling policy, it shall also adjust the scheduling policy of the user equipment which corresponds to the device 10 accordingly, so that device 10 also appropriately adjusts its scheduling policy at least for acknowledging the data packets it receives. If the first link 11 (broadband cellular network interface) is blocked, no RRC signaling can go through the first link 11, and the device 10 will go ahead wrongly trying to acknowledge over the blocked first link 11. Transmitting through the second link 12 signalling packets comprising radio resource control signalling related to the first link 11 advantageously allows the device 10 to correctly acknowledge received packets and contributes to the improvement of the performances.

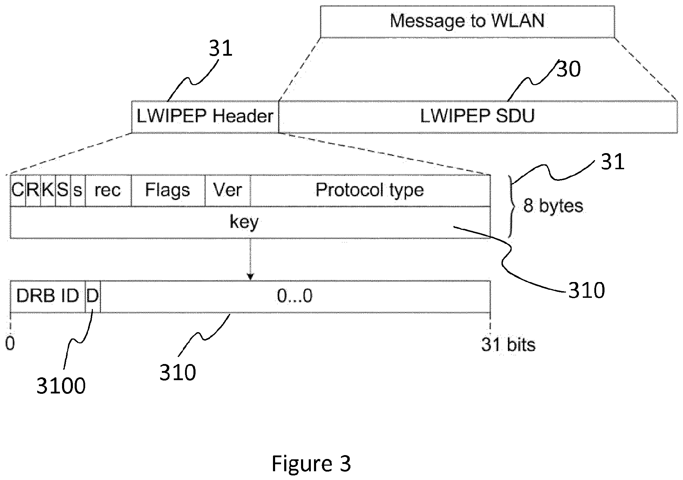

**Figure 3** illustrates a structure of a data packet according to a specific and non-limiting embodiment of the disclosed principles. **Figure 3** shows a data packet 30, received for example through the third link 13 and to be sent on one of either the first link 11 or the second link 12, using an aggregation protocol layer. Without limitation, **Figure 3** illustrates the use of LWIP tunnel as the aggregation layer, but the same would apply to for example LWA. **Figure 3** illustrates more precisely the LWIP encapsulation protocol (LWIPEP). Before transmitting through the first link 11 or the second link 12, a LWIPEP header 31 is added to the data packet 30, the data packet 30 corresponding to the LWIPEP service data unit (LWIPEP SDU). The LWIPEP header 31 comprises a key field 310 among various fields. The key field is thirty-two bits long comprises a DRB ID field which is five bits long. All remaining MSB's (Most Significant Bits) of the key field are set to '0' as specified by the 3GPP standard in the Technical Specification TS 36.361 V14.1.0 version of June 2017 or any earlier version. Advantageously, one of the remaining MSB's of the key field, for example the 6^{th} bit of the key field, called the D field 3100 is used to signal whether the LWIPEP packet encapsulates a data packet or a RRC signalling packet. If the value of the D field 3100 is equal to zero (value of the remaining MSB's), the LWIPEP packet encapsulates a data packet 30. Otherwise, if the value of the D field 3100 is equal to one, the LWIPEP packet encapsulates a signalling message. Setting the D bit to one allows to indicate to the device 10 a specific mapping and that the encapsulated packet is a signalling packet related to the radio resource of the first link 11.

In an advantageous variant, when the first link 11 is detected operational again, the signalling messages are sent to the device via the first link 11 again.

In another advantageous variant, the D bit is also used to encapsulate signalling messages related to a cell handover corresponding to the first link 11. If for example the first link 11 is severely disturbed, and if the networking equipment 1 acting as a LTE source eNB decides to start a handover for the device 10 acting as a User Equipment (UE) towards a target eNB, some handover messages can be advantageously sent to the device 10 via the second link 12, encapsulating the handover signalling messages in a LWIPEP packet by setting the D bit to one. In case the first link 11 is completely stalled, encapsulating the handover signalling messages in a LWIPEP packet allows the device 10 to complete the handover to the target eNB despite a complete disruption of the first link 11 with the source eNB.

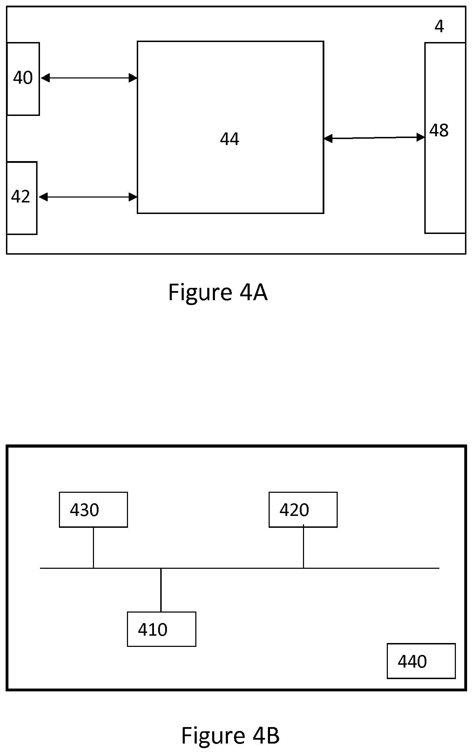

**Figure 4A** illustrates a processing device for sending data packets to a device according to a specific and non-limiting embodiment of the disclosed principles. The processing device 4A comprises a first 40 a second 42 and a third 48 network interface 40 configured to send and receive data packets with other devices. According to different embodiments of the disclosed principles, the first 40, the second 42 and the third 48 network interfaces belong to a set comprising:
- a broadband cellular wireless network interface such a 2G/3G/4G/5G cellular wireless network interface compliant to the 3GPP specification in any of its releases;
- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces.
- A wired bus interface such as USB, FireWire, or any kind of wired bus technology.
- a wide area network interface such a xDSL, FFTx interface;

More generally, any network interface allowing to send and receive data packets are compatible with the disclosed principles.

According to a specific and non-limiting embodiment, the first 40, the second 42 and the third 48 network interfaces are coupled to a processing module 44, configured to receive data packets from a third link 13 via the third network interface. The processing module 44 is also configured to forward the received data packets to a device 10 by dispatching the data packets on a first link 11 and a second link 12 via respectively the first 40 and the second 42 network interfaces, according to a scheduling policy. The processing module 44 is further configured to detect retransmitted packets among the received data packets, the detected retransmitted packets being representative of a disturbance of the first link 11. The processing module 44 is further configured to send an increased proportion of the data packets on the second link 12 as a function of the detected retransmitted packets by adjusting the scheduling policy.

**Figure 4B** represents an exemplary architecture of the processing device 4A according to a specific and non-limiting embodiment of the disclosed principles. The processing device 4A comprises one or more processor(s) 410, which is(are), for example, a CPU, a GPU and/or a DSP (English acronym of Digital Signal Processor), along with internal memory 420 (e.g. RAM, ROM, EPROM). The processing device 4A, 4C comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 4A, 4C.

According to an exemplary and non-limiting embodiment, the processing device 4A further comprises a computer program stored in the memory 420. The computer program comprises instructions which, when executed by the processing device 4A, in particular by the processor 410, make the processing device 3 carrying out the processing method described with reference to figure 2. According to a variant, the computer program is stored externally to the processing device 4A on a non-transitory digital data support, e.g. on an external storage medium such as a SD Card, HDD, CD-ROM, DVD, a read-only and/or DVD drive and/or a DVD Read/Write drive, all known in the art. The processing device 4A thus comprises an interface to read the computer program. Further, the processing device 4A could access one or more Universal Serial Bus (USB)-type storage devices (e.g., "memory sticks.") through corresponding USB ports (not shown).

According to exemplary and non-limiting embodiments, the processing device 4A is a device, which belongs to a set comprising:
- a LTE eNB;
- a cellular base station according to any cellular network standard;
- a wireless access point;
- an internet gateway;
- a laptop computer;
- a desktop computer;
- a server;
- a networking device such a router, a bridge, a switch, a hub, or any combination thereof.

## Claims

1. A method for sending data packets from a server (100) to a device (10) through a networking equipment (1), the data packets being sent from the networking equipment (1) to the device (10) on a first (11) and a second (12) links, the method comprising in the networking equipment (1):
- receiving (S20) the data packets from the server (100) through a third link (13);
- detecting (S22) a portion of the data packets among the received data packets as having been retransmitted by the server (100), the detected portion of the data packets corresponding to a retransmission of at least one data packet initially transmitted on the first link (11) and being representative of a disturbance of the first link (11);
- sending (S24) an increased proportion of the data packets through the second link (12) as a function of the detected portion of the data packets.

2. The method according to claim 1, further comprising sending, through the first link (11), a decreased proportion of the data packets as a function of the detected portion of the data packets.

3. The method according to claim 1, wherein sending (S24) the increased proportion of the data packets through the second link (12) corresponds to exclusively sending the data packets on the second link (12).

4. The method according to any of claims 1 to 3, further comprising extracting a sequence number of a protocol from a packet received from the server (100) through the third link (13), said packet being detected as having been retransmitted by the server in case the extracted sequence number matches a previous sequence number of the protocol, extracted from a previous packet previously received through the third link (13) and sent through the first link (11), the sequence number and the previous sequence numbers corresponding to a same session of the protocol.

5. The method according to any of claims 1 to 4, wherein the increased proportion of the data packets is sent through the second link (12) during a first period of time before a restored proportion of the data packets is sent (S26) through the second link (12), the restored proportion corresponding to a proportion of data packets sent through the second link (12) before sending the increased proportion.

6. The method according to any of claims 1 to 4, further comprising monitoring (S25) the first link (11) while sending (S24) the increased proportion of the data packets through the second link (12).

7. The method according to claim 6, wherein monitoring (S25) the first link (11) comprises sending probe packets to the device through the first link (11) and detecting the first link (11) being operational again when acknowledgment packets are received in response to the probe packets.

8. The method according to claim 7, further comprising sending (S27) a restored first proportion of the data packets through the first link (11) and a restored second proportion of the data packets through the second link (12), the restored first and second proportions corresponding to the proportions sent respectively through the first (11) and second (12) links before sending the increased proportion through the second link (12).

9. The method according to any claims 1 to 8, wherein the first link (11) is a broadband cellular wireless network link, and the second link (12) is a wireless local area network link.

10. The method according to claim 9, wherein the first link (11) uses millimetric radio frequency channels.

11. The method according to claim 10, further comprising avoiding a handover of the first link despite of a disturbance of the first link (11) during at least a third period of time.

12. The method according to any claims 9 to 11, further comprising transmitting signalling packets through the second link (12), the signalling packets comprising radio resource control signalling related to the first link (11).

13. The method according to claim 12, wherein an Aggregation Using IPSec tunnel is used to aggregate the first (11) and the second (12) links, the signalling packets being LWIP packets, encapsulating RRC signalling messages.

14. A networking equipment (1, 4) for sending data packets to a device (10) through a first (11) and a second (12) links, the data packets having been received from a server (100), the networking equipment (1, 4) comprising:
- means (48) for receiving the data packets from the server (100) through a third link
- means (44) for detecting a portion of the data packets among the received data packets as having been retransmitted by the server (100), the detected portion of the data packets corresponding to a retransmission of at least one data packet initially transmitted on the first link (11) and being representative of a disturbance of the first link;
- means (40) for sending an increased proportion of the data packets through the second link (12) as a function of the detected portion of the data packets.

15. A computer program product for sending data packets, the computer program product comprising program code instructions executable by a processor for executing the method according to any of claims 1 to 13.

## Patentansprüche

1. Verfahren zum Senden von Datenpaketen von einem Server (100) an ein Gerät (10) über eine Netzwerkeinrichtung (1), wobei die Datenpakete auf einer ersten (11) und einer zweiten (12) Verbindung von der Netzwerkeinrichtung (1) an das Gerät (10) gesendet werden, wobei das Verfahren in der Netzwerkeinrichtung (1) Folgendes umfasst:
- Empfangen (S20) der Datenpakete von dem Server (100) über eine dritte Verbindung (13),
- Erkennen (S22), dass ein Teil der Datenpakete unter den empfangenen Datenpaketen durch den Server (100) neu übertragen worden ist, wobei der erkannte Teil der Datenpakete einer Neuübertragung wenigstens eines Datenpakets, das zunächst auf der ersten Verbindung (11) übertragen worden ist, entspricht und repräsentativ für eine Störung der ersten Verbindung (11) ist,
- Senden (S24) eines größeren Anteils der Datenpakete über die zweite Verbindung (12) in Abhängigkeit von dem erkannten Teil der Datenpakete.

2. Verfahren nach Anspruch 1, ferner umfassend das Senden eines kleineren Anteils der Datenpakete über die erste Verbindung (11) in Abhängigkeit von dem erkannten Teil der Datenpakete.

3. Verfahren nach Anspruch 1, wobei das Senden (S24) des größeren Anteils der Datenpakete über die zweite Verbindung (12) einem ausschließlichen Senden der Datenpakete auf der zweiten Verbindung (12) entspricht.

4. Verfahren nach einem der Ansprüche 1 bis 3, ferner umfassend das Extrahieren einer laufenden Nummer eines Protokolls aus einem Paket, das von dem Server (100) über die dritte Verbindung (13) empfangen worden ist, wobei erkannt wird, dass das Paket durch den Server neu übertragen worden ist, falls die extrahierte laufende Nummer einer vorherigen laufenden Nummer des Protokolls entspricht, die aus einem vorherigen Paket extrahiert worden ist, das zuvor über die dritte Verbindung (13) empfangen und über die erste Verbindung (11) gesendet worden ist, wobei die laufende Nummer und die vorherigen laufenden Nummern einer gleichen Sitzung des Protokolls entsprechen.

5. Verfahren nach einem der Ansprüche 1 bis 4, wobei der größere Anteil der Datenpakete über die zweite Verbindung (12) während eines ersten Zeitraums gesendet wird, bevor ein wiederhergestellter Anteil der Datenpakete über die zweite Verbindung (12) gesendet wird (S26), wobei der wiederhergestellte Anteil einem Anteil von Datenpaketen entspricht, der über die zweite Verbindung (12) vor dem Senden des größeren Anteils gesendet worden ist.

6. Verfahren nach einem der Ansprüche 1 bis 4, ferner umfassend das Überwachen (S25) der ersten Verbindung (11), während der größere Anteil der Datenpakete über die zweite Verbindung (12) gesendet wird (S24).

7. Verfahren nach Anspruch 6, wobei das Überwachen (S25) der ersten Verbindung (11) das Senden von Prüfpaketen an das Gerät über die erste Verbindung (11) und das Erkennen umfasst, dass die erste Verbindung (11) wieder funktionsfähig ist, wenn Bestätigungspakete in Reaktion auf die Prüfpakete empfangen werden.

8. Verfahren nach Anspruch 7, ferner umfassend das Senden (S27) eines wiederhergestellten ersten Anteils der Datenpakete über die erste Verbindung (11) und eines wiederhergestellten zweiten Anteils der Datenpakete über die zweite Verbindung (12), wobei der wiederhergestellte erste und der wiederhergestellte zweite Anteil den Anteilen entsprechen, die jeweils über die erste (11) und die zweite (12) Verbindung gesendet worden sind, bevor der größere Anteil über die zweite Verbindung (12) gesendet wird.

9. Verfahren nach einem der Ansprüche 1 bis 8, wobei die erste Verbindung (11) eine Mobilfunknetzverbindung ist und die zweite Verbindung (12) eine drahtlose Local-Area-Network-Verbindung ist.

10. Verfahren nach Anspruch 9, wobei die erste Verbindung (11) Hochfrequenzkanäle im Millimeterbereich verwendet.

11. Verfahren nach Anspruch 10, ferner umfassend das Vermeiden einer Übergabe der ersten Verbindung trotz einer Störung der ersten Verbindung (11) während wenigstens eines dritten Zeitraums.

12. Verfahren nach einem der Ansprüche 9 bis 11, ferner umfassend das Übertragen von Signalisierungspaketen über die zweite Verbindung (12), wobei die Signalisierungspakete eine auf die erste Verbindung (11) bezogene Signalisierung für die Steuerung von funktechnischen Ressourcen umfassen.

13. Verfahren nach Anspruch 12, wobei eine einen IPSec-Tunnel nutzende Aggregation verwendet wird, um die erste (11) und die zweite (12) Verbindung zu aggregieren, wobei die Signalisierungspakete LWIP-Pakete sind, die RRC-Signalisierungsbotschaften verkapseln.

14. Netzwerkeinrichtung (1, 4) zum Senden von Datenpaketen an ein Gerät (10) über eine erste (11) und eine zweite (12) Verbindung, wobei die Datenpakete von einem Server (100) empfangen worden sind, wobei die Netzwerkeinrichtung (1, 4) Folgendes umfasst:
- Mittel (48) zum Empfangen der Datenpakete von dem Server (100) über eine dritte Verbindung,
- Mittel (44) zum Erkennen, dass ein Teil der Datenpakete unter den empfangenen Datenpaketen durch den Server (100) neu übertragen worden ist, wobei der erkannte Teil der Datenpakete einer Neuübertragung wenigstens eines Datenpakets, das zunächst auf der ersten Verbindung (11) übertragen worden ist, entspricht und repräsentativ für eine Störung der ersten Verbindung ist,
- Mittel (40) zum Senden eines größeren Anteils der Datenpakete über die zweite Verbindung (12) in Abhängigkeit von dem erkannten Teil der Datenpakete.

15. Computerprogrammprodukt zum Senden von Datenpaketen, wobei das Computerprogrammprodukt Programmcodebefehle umfasst, die durch einen Prozessor zum Durchführen des Verfahrens nach einem der Ansprüche 1 bis 13 ausführbar sind.

## Revendications

1. Procédé pour envoyer des paquets de données d'un serveur (100) à un dispositif (10) par l'intermédiaire d'un équipement de réseau (1), les paquets de données étant envoyés de l'équipement de réseau (1) au dispositif (10) sur une première (11) et une deuxième (12) liaisons, le procédé comprenant dans l'équipement de réseau (1) :
- la réception (S20) des paquets de données du serveur (100) par l'intermédiaire d'une troisième liaison (13) ;
- la détection (S22) d'une partie des paquets de données parmi les paquets de données reçus comme ayant été retransmis par le serveur (100), la partie détectée des paquets de données correspondant à une retransmission d'au moins un paquet de données initialement transmis sur la première liaison (11) et étant représentative d'une perturbation de la première liaison (11) ;
- l'envoi (S24) d'une proportion accrue des paquets de données par l'intermédiaire de la deuxième liaison (12) en fonction de la partie détectée des paquets de données.

2. Procédé selon la revendication 1, comprenant en outre l'envoi, par l'intermédiaire de la première liaison (11), d'une proportion réduite des paquets de données en fonction de la partie détectée des paquets de données.

3. Procédé selon la revendication 1, dans lequel l'envoi (S24) de la proportion accrue des paquets de données par l'intermédiaire de la deuxième liaison (12) correspond à l'envoi exclusif des paquets de données sur la deuxième liaison (12).

4. Procédé selon l'une quelconque des revendications 1 à 3, comprenant en outre l'extraction d'un numéro de séquence d'un protocole à partir d'un paquet reçu du serveur (100) par l'intermédiaire de la troisième liaison (13), ledit paquet étant détecté comme ayant été retransmis par le serveur dans le cas où le numéro de séquence extrait correspond à un numéro de séquence précédent du protocole, extrait d'un paquet précédent reçu précédemment par l'intermédiaire de la troisième liaison (13) et envoyé par l'intermédiaire de la première liaison (11), le numéro de séquence et les numéros de séquence précédents correspondant à une même session du protocole.

5. Procédé selon l'une quelconque des revendications 1 à 4, dans lequel la proportion accrue des paquets de données est envoyée par l'intermédiaire de la deuxième liaison (12) pendant une première période avant qu'une proportion restaurée des paquets de données soit envoyée (S26) par l'intermédiaire de la deuxième liaison (12), la proportion restaurée correspondant à une proportion des paquets de données envoyés par l'intermédiaire de la deuxième liaison (12) avant l'envoi de la proportion accrue.

6. Procédé selon l'une quelconque des revendications 1 à 4, comprenant en outre la surveillance (S25) de la première liaison (11) pendant l'envoi (S24) de la proportion accrue des paquets de données par l'intermédiaire de la deuxième liaison (12).

7. Procédé selon la revendication 6, dans lequel la surveillance (S25) de la première liaison (11) comprend l'envoi de paquets d'évaluation au dispositif par l'intermédiaire de la première liaison (11) et la détection du retour à l'état opérationnel de la première liaison (11) lorsque des paquets d'accusé de réception sont reçus en réponse aux paquets d'évaluation.

8. Procédé selon la revendication 7, comprenant en outre l'envoi (S27) d'une première proportion restaurée des paquets de données par l'intermédiaire de la première liaison (11) et d'une deuxième proportion restaurée des paquets de données par l'intermédiaire de la deuxième liaison (12), les première et deuxième proportions restaurées correspondant aux proportions envoyées respectivement par l'intermédiaire de la première (11) et de la deuxième (12) liaisons avant l'envoi de la proportion accrue par l'intermédiaire de la deuxième liaison (12).

9. Procédé selon l'une quelconque des revendications 1 à 8, dans lequel la première liaison (11) est une liaison de réseau sans fil cellulaire à large bande, et la deuxième liaison (12) est une liaison de réseau local sans fil.

10. Procédé selon la revendication 9, dans laquelle la première liaison (11) utilise des canaux de radiofréquences millimétriques.

11. Procédé selon la revendication 10, consistant en outre à éviter un transfert de la première liaison malgré une perturbation de la première liaison (11) pendant au moins une troisième période.

12. Procédé selon l'une quelconque des revendications 9 à 11, comprenant en outre la transmission de paquets de signalisation par l'intermédiaire de la deuxième liaison (12), les paquets de signalisation comprenant une signalisation de contrôle des ressources radio liée à la première liaison (11).

13. Procédé selon la revendication 12, dans lequel un tunnel d'agrégation utilisant IPSec est utilisé pour agréger la première (11) et la deuxième (12) liaisons, les paquets de signalisation étant des paquets LWIP, encapsulant des messages de signalisation RRC.

14. Équipement de réseau (1, 4) pour envoyer des paquets de données à un dispositif (10) par l'intermédiaire d'une première (11) et d'une deuxième (12) liaisons, les paquets de données ayant été reçus d'un serveur (100), l'équipement de réseau (1, 4) comprenant :
- un moyen (48) pour recevoir les paquets de données du serveur (100) par l'intermédiaire d'une troisième liaison
- un moyen (44) pour détecter une partie des paquets de données parmi les paquets de données reçus comme ayant été retransmis par le serveur (100), la proportion détectée des paquets de données correspondant à une retransmission d'au moins un paquet de données initialement transmis sur la première liaison (11) et étant représentative d'une perturbation de la première liaison ;
- un moyen (40) pour envoyer une proportion accrue des paquets de données par l'intermédiaire de la deuxième liaison (12) en fonction de la partie détectée des paquets de données.

15. Programme informatique pour l'envoi de paquets de données, le programme informatique comprenant des instructions de code de programme exécutables par un processeur pour exécuter le procédé selon l'une quelconque des revendications 1 à 13.
